# EUROPÄISCHE PATENTSCHRIFT

(11) **EP 0 694 161 B1**
(45) Veröffentlichungstag und Bekanntmachung des Hinweises auf die Patenterteilung: **03.09.1997**
(21) Anmeldenummer: 94912493.7
(22) Anmeldetag: 22.03.1994
(51) Int. Cl.: G01L 5/16

(54) **MESSRAD**
MEASURING WHEEL
ROUE MESUREUSE

(30) Priorität: 10.04.1993 DE 4311903
(43) Veröffentlichungstag der Anmeldung: 31.01.1996
(73) Patentinhaber: AUDI AG, 85045 Ingolstadt (DE)
(72) Erfinder: BESTE, Andreas, D-85080 Gaimersheim (DE); VOGLER, Josef, D-85049 Ingolstadt (DE); HAILER, Frank, D-75365 Calw (DE); MÜLLER, Manfred, D-71229 Leonberg (DE); AICHER, Werner, D-70569 Stuttgart (DE)
(74) Vertreter: Geissler, Manfred
(86) Internationale Anmeldenummer: EP9400886
(87) Internationale Veröffentlichungsnummer: WO9424535

(56) Entgegenhaltungen:
- EP-A- 0 352 788
- DE-A- 3 937 966
- ATZ AUTOMOBILTECHNISCHE ZEEITSCHRIFT, Bd.94, Nr.1, 1. Januar 1992, Stuttgart, DE, Seiten 44-53, XP241631; R. LOH et al.: 'Mehrkomponenten-Radmessnabe - Einsatzmöglichkeiten und Ergebnisse'
- G. WEIGER et al.: 'Mehrkomponenten-Messnaben zur Erfassung von Radkräften - Vergleich verschiedener Konstruktionsprinzipien' in VDI Berichte Nr. 632, 1987, Düsseldorf, DE

## Beschreibung

Die Erfindung bezieht sich auf ein Meßrad zum Erfassen von Kräften und Momenten zwischen Felge und Achse eines Fahrzeugrades mit den weiteren Merkmalen gemäß Oberbegriff des Patentanspruches 1.

Betriebsfestigkeitsprüfungen und Fahrdynamikuntersuchungen sind ein wesentlicher Bestandteil bei der Entwicklung von Fahrzeugen, insbesondere in Zusammenhang mit sicherheitsrelvanten Funktionsgruppen, zu denen unter anderem die Fahrzeugräder und das sie aufnehmende Fahrwerk zählen.

Die entsprechenden Untersuchungen werden auf Belastungsprüfständen und im Fahrzeug durchgeführt. Voraussetzung hierfür ist, daß die im Fahrbetrieb auftretenden Kräfte im Fahrversuch ermittelt werden.

Für eine solche Mehrkomponenten-Kraftmessung am rotierenden Rad werden Meßräder eingesetzt. An einer Schnittstelle im Meßrad wird der Kraftfluß durch geeignete Meßelemente hindurchgeleitet. Als solche kommen üblicherweise Federkörper mit Dehnungsmeßstreifen (DMS) oder Quarzaufnehmer zum Einsatz. Die ermittelten Meßwerte werden online oder offline vom rotierenden Koordinatensystem des Rades auf das Koordinatensystem des Fahrzeugs umgerechnet. Hierzu ist auch erforderlich, die Winkelstellung des Rades zu erfassen.

Ausführungsbeispiele für solche Meßräder und Einzelheiten zur Versuchsdurchführung sind beispielsweise im Bericht "Mehrkomponenten - Radmeßnabe, Einsatzmöglichkeiten und Ergebnisse" in ATZ Automobiltechnische Zeitschrift 94 (1992) Seiten 44 bis 53, näher beschrieben. Die dort beispielsweise auf Seite 45 im einzelnen gezeigte Mehrkomponenten-Radmeßnabe besteht aus einer modifizierten Felge, einem Radflansch, einem Meßwertaufnehmer und einer Elektronikkomponente. Der Meßwertaufnehmer dient dabei dem Erfassen der dynamischen Kräfte und Momente. Auf einem speziell konzipierten Aluminiumteil sind die zu deren Ermittlung notwendigen DMS-Applikationen ausgeführt. Die Elektronikkomponente umfaßt einen Gleichspannungsverstärker für jede Meßgröße, einen Schleifringdrehübertrager und einen Resolver zur Bestimmung der Radposition (Drehwinkel des Rades um die Y-Achse).

Ein solches Meßrad weist den wesentlichen Nachteil auf, daß es weder in statischer noch in dynamischer Hinsicht mit einem später im Fahrzeug verbauten Originalrad übereinstimmt. So ist durch den versuchsgemäßen Aufbau das Radgewicht beträchtlich erhöht worden, wie auch die relativ weit nach außen ragenden Teile (Schleifringdrehübertrager, Resolver) eine zusätzliche Momentenwirkung im Fahrbetrieb haben und eine Gefährdung im öffentlichen Straßenverkehr darstellen, was Messungen im Kundenbetrieb unmöglich macht oder zumindest sehr erschwert. Auf Seite 46, Ziffer 2.2, dieser Literaturstelle ist daher auch beschrieben, wie man diese ergebnisverfälschenden Einflüsse zu kompensieren versucht.

Zwar ist auf Seite 53, Bild 24, eine modifizierte (Resolver ist durch Inkrementalgeber ersetzt, der Schleifringdrehübertrager durch eine Infratrot-Telemetriestrecke, die Spannungsversorgung der Elektronik erfolgt induktiv) Mehrkomponenten-Radmeßnabe beschrieben, bei der die Gesamtbreite des Meßsystems reduziert werden konnte, die vorstehend genannten Nachteile können damit allerdings nur zum Teil beseitigt werden.

Davon ausgehend ist es die Aufgabe der Erfindung, das bekannte Meßrad dahingehend weiterzubilden, daß es hinsichtlich seiner statischen Eigenschaften und seines dynamischen Verhaltens im Fahrbetrieb dem Originalrad weitestgehend entspricht.

Dies gelingt erfindungsgemäß durch eine Ausbildung des Meßrades entsprechend den kennzeichnenden Merkmalen des Patentanspruches 1.

Es ist zwar durch die DE 39 37 966 Al bereits bekannt geworden, einen Teil eines Senders von Meßsignalen an einer Radfelgen-Innenseite anzuordnen, um über den eigentlichen Sender mit einem karosserieseitigen Signalempfägner zu korrespondieren, wobei die Signalübertragung berührungslos, beispielsweise induktiv über ein frequenzmoduliertes Signal, oder auch über Schleifringe erfolgen kann. In dieser Vorveröffentlichung ist allerdings nicht ein Meßrad, sondern vielmehr ein Verfahren und eine Vorrichtung zur Bestimmung der Kraftschlußverhältnisse zwischen Fahrzeugreifen und Fahrbahn beschrieben, wofür im Reifenprotektor mindestens ein Sensor angeordnet ist, der beim Durchlaufen des Reifenlatsches die Verläufe der lokalen Spannungen bzw. Dehnungen bzw. Verformungen in horizontaler Richtung und in Normalrichtung erfaßt. Damit läßt sich sowohl der augenblickliche Kraftschlußbeiwert als auch der maximal mögliche Kraftschlußbeiwert zwischen dem Fahrzeugreifen und der Fahrbahn ermitteln.

Weiterbildungen der Erfindung sind in den Unteransprüchen dargelegt. Ein bevorzugtes Ausführungsbeispiel ist nachstehend beschrieben. Die zugehörige Zeichnung zeigt in
- Fig. 1: ein Rad eines Kraftfahrzeuges mit den dort während des Fahrbetriebes auftretenden Kräften und Momenten,
- Fig. 2: eine schematisierte Schnitt-Darstellung des erfindungsgemäßen Meßrades gemäß Pfeile II in Fig. 4,

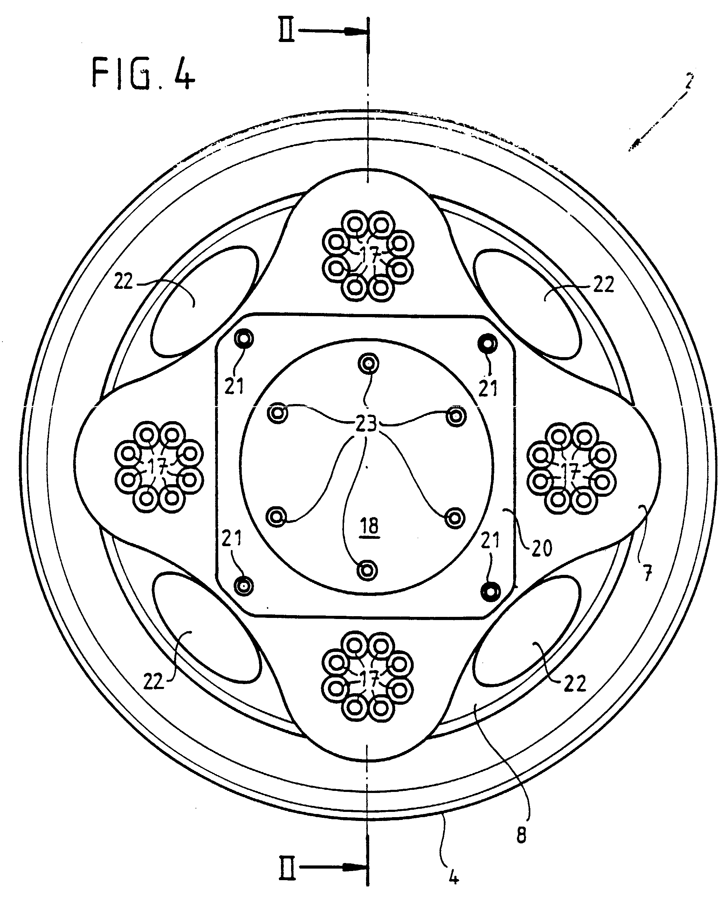

- Fig. 3: eine Seitenansicht des zugeordneten und an der Radachse (Federbein) befestigten Stators und
- Fig. 4: eine Ansicht des Maßrades gemäß Pfeil IV in Fig. 2.

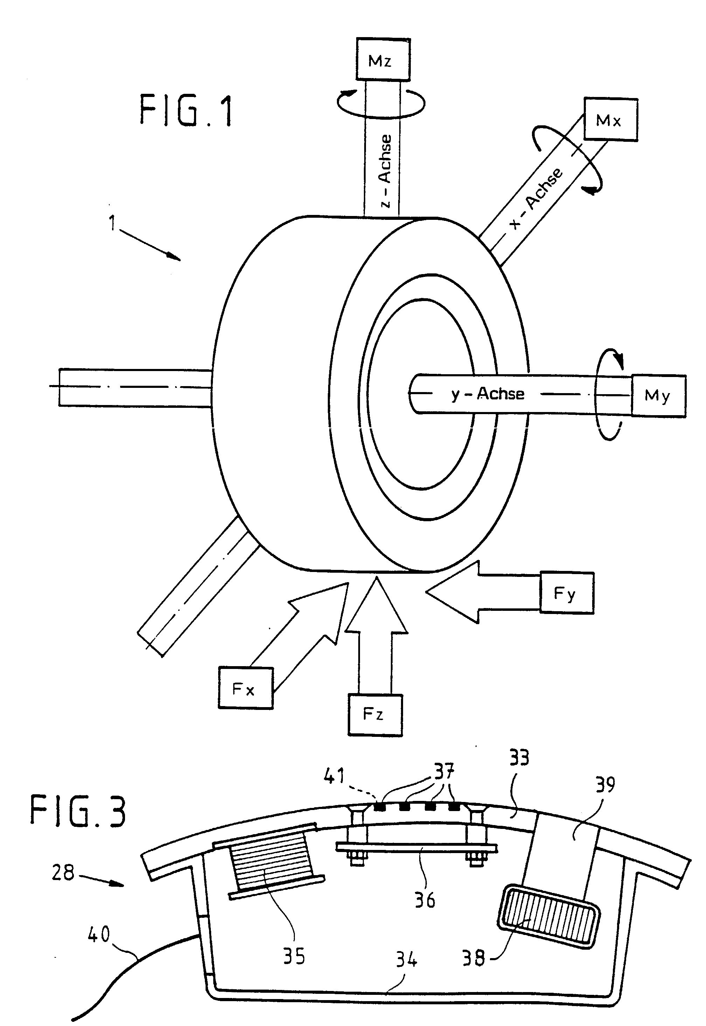

Während des Fahrbetriebes eines Kraftfahrzeuges treten an jedem Rad 1 die in Figur 1 gezeigten Kräfte F_{X}, F_{Y}, F_{Z} in der durch Pfeile angedeuteten Wirkungsrichtung sowie die um die X-, Y-, Z-Achse wirkenden Momente M_{X}, M_{Y} und M_{Z} auf.

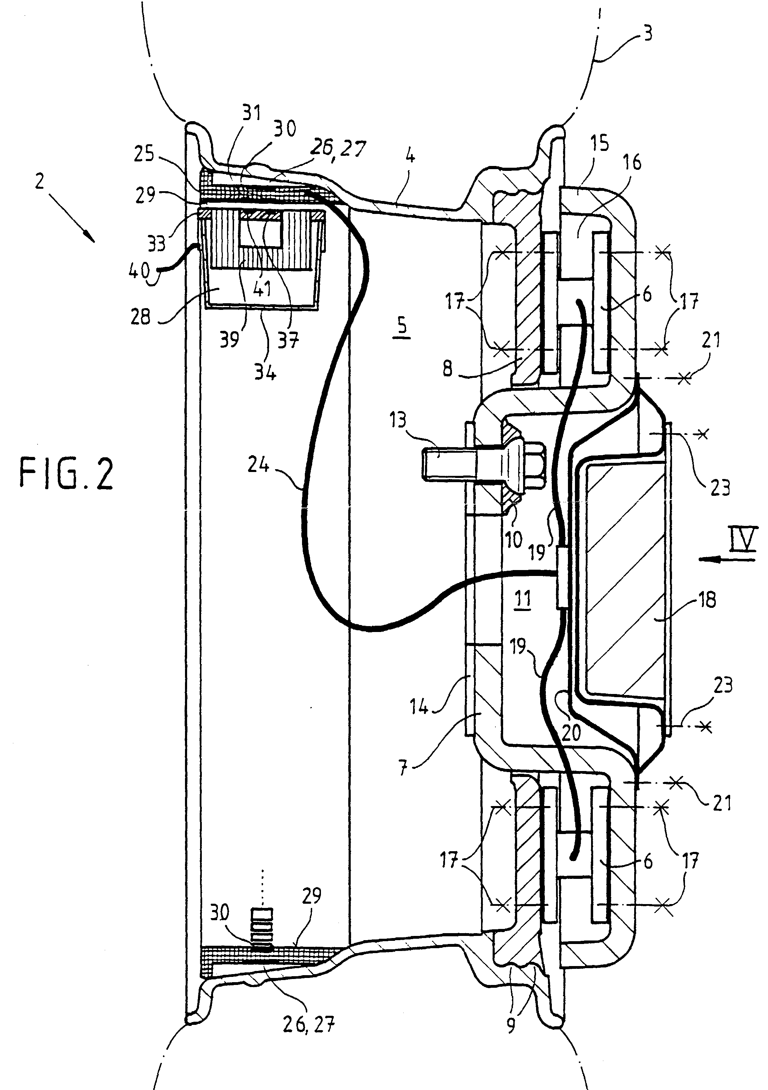

Zur Bestimmung dieser drei äußeren auf den Radaufstandspunkt bezogenen Kräfte und Momente dient das in den Figuren 2 und 4 gezeigte Meßrad 2. Ein strichpunktiert angedeuteter Reifen 3 ist in bekannter Weise von einem beispielsweise aus einer Aluminiumlegierung gefertigten Felgenbett 4 einer Felge 5 aufgenommen. Eine sich an das Felgenbett 4 anschließende, über Meßwertaufnehmer (DMS-Meßdosen 6) mit einem Radflansch 7 verbundene Felgenstirnseite 8 besteht ebenso wie der im zentralen Innenteil topfförmig ausgebildete Radflansch 7 aus einem Faserverbundwerkstoff (CFK = kohlefaserverstärkter Kunststoff). Für die zur Optimierung der statischen und dynamischen Eigenschaften angestrebte Gewichtsreduzierung des Meßrades 2 könnte ggf. ausreichend sein, lediglich eines der beiden Bauteile - Radflansch 7, Felgenstirnseite 8 - aus einem Faserverbundwerkstoff und das andere wie üblich aus Metall zu fertigen.

Die Verbindung zwischen Felgenbett 4 und Felgenstirnseite 8 erfolgt dahingehend, daß der Faserverbundwerkstoff in dem vorher sandgestrahlten Felgenbett 4 gefertigt wird. Damit wirkt die Verbindung wie eine großflächige Klebeverbindung (Adhäsionskräfte). Darüber hinaus wird das Felgenbett 4 vor dem Sandstrahlen so bearbeitet (Rippen 9), daß eine formschlüssige Verbindung entsteht, die die angeschlossenen Teile gegen axiale und radiale Verschiebungen sichert. Letztlich wird die Aushärtung der Felgenstirnseite 8 so gesteuert, daß das Felgenbett 4 unter einer Zugvorspannung steht. Dadurch, daß der verwendete Faserverbundwerkstoff CFK einen hohen E-Modul (ca. 100 000 N/mm²) besitzt, weist die Felge 5 insgesamt eine Steifigkeit auf, die der einer serienmäßigen Felge entspricht.

Der Radflansch 7 ist über auf Titan-Unterlagen 10 aufsitzende Schrauben 13 mit der hier nicht gezeigten Radachse verbunden. Eine zusätzliche, zwischengelegte Scheibe 14, z.B. aus Polyimid oder Keramik, bildet eine gewisse Wärmedämmung gegenüber beispielsweise bei Bremsvorgängen von in das noch zu erläuternde Meßsystem übergehende Wärme.

Weist der Radflansch 7 die in der Ansicht nach Fig.4 gezeigte quadratische Form mit nach innen gewölbten Seitenkanten auf, so können jeweils in diesen Bereichen in die Felgenstirnseite 8 eingearbeitete Durchbrüche 22 eine zusätzliche Wärmeabfuhr nach außen bewirken.

Zwischen Felgenstirnseite 8 und Radflansch 7 sind innerhalb eines durch die Kontur (zentraler Topf 11, randseitige Abkantung 15) des Radflansches 7 gebildeten Hohlraumes 16 gleichmäßig über den Umfang verteilt vier DNS-Meßdosen 6 als Meßwertaufnehmer angeordnet und mit dem Radflansch 7 bzw. der Felgenstirnseite 8 mittels Schraubverbindungen 17 verbunden. Selbstverständlich könnten je nach Größe des Meßrades 2 auch eine größere Anzahl von Meßdosen 6 zum Einsatz kommen, mindestens jedoch drei. Durch den Aufbau der Meßwertaufnehmer können sowohl statische wie auch dynamische Meßsignale genau erfaßt werden. Damit sind sowohl die einzelnen integrierten Lastmeßzellen wie auch das gesamte Meßrad 2 sehr genau statisch zu kalibrieren. Jede der vier DMS-Meßdosen ist in bekannter Weise aufgebaut und liefert dabei drei Signale, entsprechend den in ihr auftretenden Kräften F_{X}, F_{Y} und F_{Z}. Eine erste Signalaufbereitung kann bereits in der Meßdose 6 selbst durch darin eingebaute Elektronikplatinen erfolgen, die unter anderem einer Vorverstärkung der Signale und einer Übersprechkompensation dienen. Die von den Meßdosen 6 in eine in den zentralen Topf 11 der Felgenstirnseite 8 eingesetzte Elektronikeinheit 18 über Kabel 19 gelangenden Signale sind dadurch bereits vorverstärkt, so daß eine Beeinflussung durch Störfelder aus der Kfz-Elektronik unterdrückt wird.

Weitere Störsignale könnten sich dadurch ergeben, daß durch Temperaturerhöhungen infolge von Bremsungen und sich damit ergebenden Wärmedehnungen von Radflansch 7 und Felgenstirnseite 8 meßwertverfälschende zusätzliche Beanspruchungen der Meßdosen 6 auftreten. Auch diesbezüglich wirkt sich allerdings wieder äußerst positiv die Werkstoffauswahl für Radflansch 7 und Felgenstirnseite 8 aus, da der Faserverbundwerkstoff CFK nur sehr kleine Wärmedehnungen aufweist (wesentlich kleiner als Stahl oder Aluminium).

Die zwölf Kraftsignale (vier Meßdosen 6 mit jeweils drei Kraftsignalen F_{X}, F_{Y}, F_{Z}) gelangen über einen sich in den zentralen Topf 11 des Radflansches 7 hineinerstreckenden und am Radflansch 7 mittels Schrauben 21 (vgl. Fig. 4) befestigten Steckbuchsenträger 20 in die von ihm gehaltene (Schraubenverbindungen 23) Elektronikeinheit 18, die auf im Steckbuchsenträger 20 dafür vorgesehenen Steckbuchsen aufgesetzt ist.

Innerhalb der Elektronikeinheit 18 werden in bekannter Weise aus den Einzelkräften die Summenkräfte sowie die Summenmomente gebildet. Diese Signale werden zusammen mit einem Signal eines Temperatursensors, der in einem z. B. durch Bremsungen thermisch belasteten Bereich des Meßrades 2 angeordnet sein sollte, und einem Spannungsüberwachungssignal digitalisiert. Diese Daten werden in einen seriellen PCM (Pulse Code Modulation)-Datenstrom umgesetzt und frequenzmoduliert über Kabel 24 einem Spulen- und Magnetring 25 zugeführt, der aus einem glasfaserverstärkten Kunststoff gefertigt und in die Innenseite des Felgenbettes 4 geklebt ist. Der Spulen- und Magnetring 25 dient als Aufnahme für integrierte Datensende- und Energieempfangsspulen 26, 27 und trägt darüber hinaus auf seiner einem fahrzeugseitig befestigten Stator 28 zugewandten Innenseite 29 eine aus gleichmäßig über den Umfang verteilt angeordneten Ferritmagneten 30 sowie aus Synchronisationsmagneten 31 bestehende Magnetspur.

Es ist sinnvoll, den Spulen- und Magnetring 25 auf seiner dem Felgenbett 4 zugewandten Seite mit einigen Lagen magnetisch leitfähiger Folie zu hinterlegen, um die Magnetfelder der Spulen 26, 27 gegenüber dem Felgenbett 4 abzuschirmen.

Dem Spulen- und Magnetring 25 ist der bereits erwähnte, fahrwerkseitig befestigte (z. B. am Federbein) Stator 28 zugeordnet, der die mit der Datensendespule 26, der Energieempfangsspule 27 und der Magnetspur (Ferritmagnete 30, Synchronisationsmagnete 31) korrespondierenden Bauteile trägt. Das Statorgehäuse selbst ist ebenfalls aus einem glasfaserverstäkten Kunststoff gefertigt und besteht aus einem der Felgenbettkontur angepaßten, also kreislinienförmig gewölbten Bodenteil 33 und einem aufgesetzten Deckel 34. Am Bodenteil 33 sind nacheinander eine Empfangsspule 35 für die Datenübertragung, eine Elektronikplatine 36 mit integrierten Hallsensoren (vier in gleichen Abständen nacheinander angeordete Winkelsensoren 37 und ein daneben liegender Synchronisationssensor 41 für die Nullmarkierung und Fahrtrichtungserkennung der Rad-Drehbewegung) sowie eine Sendespule 38 mit Spulenkern 39 für die Energieübertragung in die Elektronikeinheit 18 befestigt. Diese Einheiten sind über ein angeschlossenes gemeinsames Daten-/Energiekabel 40 mit dem fahrzeugseitigen Meßwerterfassungs- und Verarbeitungssystem verbunden.

Alternativ könnte statt der radseitigen Datensendespule 26 eine offene Leiterschleife im Spulen- und Magnetring 25 verwendet werden. Im Stator 28 wäre dann die Empfangsspule 35 durch eine Miniaturspule und einen Vorverstärker zu ersetzen.

Die Energieübertragung erfolgt über induktiv gekoppelte Resonanzkreise, wobei die Arbeitsfrequenz bei ca. 50 KHz liegt. Der Abstand zwischen Stator 28 und Spulen- und Magnetring 25 darf zwischen 0 und 5 mm schwanken. Sende- und Empfangsspule 38, 27 sollten Anzapfungen zur Anpassung an Generator- bzw. Verbraucher aufweisen. Die Datenübertragung erfolgt ebenfalls über induktiv gekoppelte Resonanzkreise, wobei die Magnetfelder der Energie- und Datenübertragung räumlich unterschiedlich orientiert sind. Erreicht werden kann dies durch symmetrischen Wicklungsaufbau bei Sende- und Empfangsspule 38, 27 der Energieübertragung und entgegengesetztem Wicklungssinn bei Sende- und Empfangsspule 26, 35 der Datenübertragung. Dadurch ist die Einkoppelung der Energieübertragung in die Datenübertragung gering.

Für die Winkelmessung sind die vier Winkelsensoren 37 auf einem Kreisbogen im Abstand von 2,5° im Stator-Bodenteil 33 angebracht. Sie detektieren auf der Magnetspur das Feld von 180, im Abstand von 2° eingeklebten Ferritmagneten 30. Dadurch ergibt sich eine Auflösung des Raddrehwinkels von 0,5°, da jeweils nach 0,5° Drehbewegung ein Winkelsensor 37 mit einem Ferritmagneten 30 zur Deckung kommt. Der Synchronisationssensor 41 erkennt drei, neben den Ferritmagneten 30 angeordnete Synchronisationsmagnete 31. Die Auswertung der Sensorsignale erfolgt in einer Winkelmeßelektronik, die Teil des fahrzeugseitigen Meßwerterfassungs- und Verarbeitungssystems ist. Dort wird ein Zähler inkremental hoch- oder heruntergezählt, je nach Fahrtrichtung.

Mit dem erfindungsgemäßen Meßrad 2 kann auf ein über die seitlichen Fahrzeugaußenkonturen hinausragendes Energie- und Datenübertragungssystem sowie auf den hierbei erforderlichen Halterahmen verzichtet werden.

Eine Gefährdung für den Straßenverkehr ist damit nicht gegeben.

## Patentansprüche

1. Meßrad zum Erfassen von Kräften und Momenten zwischen einer ein Felgenbett für einen Fahrzeugreifen aufweisenden Felge und einer Achse eines Fahrzeugrades mit zwischen einer Felgenstirnseite und einem Radflansch angeordneten Meßwertaufnehmern und mit Mitteln zur energie- und datenübertragenden Kopplung mit einem fahrzeugseitigen Meßwerterfassungs- und -verarbeitungsSystem, dadurch gekennzeichnet, daß der Radflansch (7) und/oder die Felgenstirnseite (8) aus einem Faserverbundwerkstoff bestehen und daß die radseitigen Mittel (25) zur Energie- und Datenübertragung an der Innenseite des Felgenbettes (4) angebracht sind und sich über dessen Umfang erstrecken.

2. Meßrad nach Anspruch 1, dadurch gekennzeichnet, daß die Felgenstirnseite (8) an einem sandgestrahlten Felgenbettbereich anliegt und an diesen Anschlußstellen formschlüssig (9) und so gegen axiale und radiale Verschiebungen gesichert mit dem Felgenbett (4) verbunden ist.

3. Meßrad nach Anspruch 1, dadurch gekennzeichnet, daß der Radflansch (7) im wesentlichen als Scheibe mit randseitiger Abkantung (15) und zentraler Topfform (11) ausgebildet ist, wobei die randseitige Abkantung (15) mit der Felgenstirnseite (8) eine Anzahl von Hohlräumen (16) der Aufnahme der Meßwertaufnehmer (6) bildet und der zentrale Topf (11) im wesentlichen der Aufnahme einer Elektronikeinheit (18) dient.

4. Meßrad nach Anspruch 3, dadurch gekennzeichnet, daß der Radflansch (7) eine quadratische Form mit nach innen gewölbten Seitenkanten aufweist, wobei in diesen Bereichen in die Felgenstirnseite (8) eingearbeitete Durchbrüche (22) eine Wärmeabfuhr nach außen bewirken.

5. Meßrad nach Anspruch 3, dadurch gekennzeichnet, daß der Radflansch (7) im Bereich des zentralen Topfes (11) über Schraubverbindungen (10, 13) und eine zwischengelegte Wärmedämmscheibe (14) mit der Radachse verbunden ist.

6. Meßrad nach Anspruch 3, dadurch gekennzeichnet, daß vier als DMS-Meßdosen (6) ausgebildete Meßwertaufnehmer gleichmäßig über den Umfang verteilt angeordnet und mit Radflansch (7) und Felgenstirnseite (8) mittels Schraubverbindungen (17) verbunden sind.

7. Meßrad nach Anspruch 6, dadurch gekennzeichnet, daß die von den DMS-Meßdosen (6) gelieferten Kraftsignale F_{X}, F_{Y}, F_{Z} über Kabelanschlüsse (19) und einen die Elektronikeinheit (18) aufnehmenden Steckbuchsenträger (20) in diese gelangen.

8. Meßrad nach Anspruch 1, dadurch gekennzeichnet, daß ein der Energie- und Datenübertragung sowie der Winkelmessung dienender Spulen- und Magnetring (25) in die Innenseite des Felgenbettes (4) über dessen Umfang reichend geklebt ist, mit integrierten Datensende- und Energieempfangsspulen (26, 27) versehen ist und zur Ermittlung der Winkelstellung und der Nullmarkierung der Drehbewegung des Meßrades (2) eine Magnetspur (30, 31) aufweist.

9. Meßrad nach Anspruch 8, dadurch gekennzeichnet, daß der Spulen- und Magnetring (25) auf seiner dem Felgenbett (4) zugewandten Seite mit einer Anzahl von Lagen magnetisch leitfähiger Folie hinterlegt ist, um die Magnetfelder von Datensende- und Energieempfangsspule (26, 27) gegenüber dem Felgenbett (4) abzuschirmen.

10. Meßrad nach Anspruch 8, dadurch gekennzeichnet, daß dem Spulen- und Magnetring (25) ein achsseitig befestigter Stator (28) zugeordnet ist, der die mit Datensende- und Energieempfangsspule (26, 27) und der Magnetspur (30, 31) des Meßrades (2) korrespondierenden Bauteile (35-39,41) trägt und über ein angeschlossenes Daten-/ Energiekabel (40) mit dem fahrzeugseitigen Meßwerterfassungs- und -verarbeitungssystem verbunden ist.

11. Meßrad nach Anspruch 10, dadurch gekennzeichnet, daß an einem der Felgenbettkontur angepaßten Bodenteil (33) des Stators (28) eine Empfangsspule (35) für die Datenübertragung, eine Elektronikplatine (36) mit integrierten Hallsensoren (37,41) für das Erfassen der Rad-Drehbewegung sowie eine Sendespule (38) mit Spulenkern (39) für die Energieübertragung in die Elektronikeinheit (18) befestigt sind.

12. Meßrad nach Anspruch 11, dadurch gekennzeichnet, daß Sende- und Empfangsspule (38, 27) der Energieübertragung einerseits und Sende- und Empfangsspule (26, 35) der Datenübertragung andererseits entgegengesetzten Wicklungssinn aufweisen, so daß die Magnetfelder der Energie- und Datenübertragung räumlich unterschiedlich orientiert sind.

13. Meßrad nach Anspruch 11, dadurch gekennzeichnet, daß vier Winkelsensoren (37) auf einem Kreisbogen im Abstand von 2,5° im Stator-Bodenteil (33) angebracht sind, denen auf der Magnetspur des Spulen- und Magnetringes (25) ein Feld von 180, im Abstand von 2° eingeklebten Ferritmagneten (30) zugeordnet ist.

14. Meßrad nach einem der Ansprüche 1 bis 13, dadurch gekennzeichnet, daß Radflansch (7) und/ oder Felgenstirnseite (8) aus CFK und ein Spulen- und Magnetring (25) aus GFK bestehen.

## Claims

1. Measurement wheel for capturing the forces and torques between a wheel rim that has a wheel rim base for a vehicle tyre, and an axle of a vehicle wheel, with measurement value transducers arranged between a wheel rim end face and a wheel flange, and with means for power and data transmitting coupling with a measurement value capturing and processing system on the vehicle, characterised in that the wheel flange (7) and/or the wheel rim end face (8) consists of a fibre reinforced material and that the means (25) on the wheel for power and data transmission are arranged on the the inner side of the wheel rim base (4) and extend along its circumference.

2. Measurement wheel according to claim 1, characterised in that the wheel rim end face (8) adjoins a sandblasted region of the wheel rim base and is connected at these attachment locations in interlocking (9) manner and thus secured against axial and radial displacement.

3. Measurement wheel according to claim 1, characterised in that the wheel flange (7) is formed essentially as a disc with an edge (15) towards the wheel and a central pot shape (11), the edge (15) towards the wheel forming a number of cavities (16) with the wheel rim end face (8) to receive the measurement value transducers (6), and the central pot (11) serving essentially to receive an electronic unit (18).

4. Measurement wheel according to claim 3, characterised in that the wheel flange (7) is of square shape with inwardly domed lateral edges, openings (22) incorporated in the wheel rim end face (8) in these regions dissipating heat to the outside.

5. Measurement wheel according to claim 3, characterised in that the wheel flange (7) is connected with the wheel axle in the region of the central pot (11) by way of screw connections (10, 13) and an interposed heat insulating disc (14).

6. Measurement wheel according to claim 3, characterised in that four measurement value transducers in the form of resistance strain gauge load cells (6) are arranged equally spaced along the circumference and are connected with the wheel flange (7) and the wheel rim end face (8) by way of screw connections (17).

7. Measurement wheel according to claim 6, characterised in that the force signals Fx, FY, Fz delivered by the resistance strain gauge load cells (6), reach an electric unit (18) via cable connections (19) and via a plug socket carrier (20) which accommodates the electronic unit (18).

8. Measurement wheel according to claim 1, characterised in that a coil and magnet ring (25) serving for power and data transmission and also for angle measurement, is glued to the inner side of the wheel rim base (4) extending along the circumference of the latter, is provided with integrated data sending and power receiving coils (26, 27), and has a magnet track (30, 31) for ascertainment of the angular position of the measurement wheel (2) and the zero reading of its rotation.

9. Measurement wheel according to claim 8, characterised in that the coil and magnet ring (25), at its side facing the wheel rim base (4), is backed by a number of layers of magnetically conducting foil for screening the magnetic fields of the data sending and power receiving coil (26, 27) as against the wheel rim base (4).

10. Measurement wheel according to claim 8, characterised in that the coil and magnet ring (25) has associated with it a stator (28) secured on the axle side, which carries components (35-39, 41) corresponding to the data sending and power receiving coil (26, 27) and the magnet track (30, 31) of the measurement wheel (2), and which is connected with the measurement value capturing and processing system on the vehicle via a connected data and power cable (40).

11. Measurement wheel according to claim 10, characterised in that the base (33) of the stator (28), which matches the profile of the wheel rim base, has secured to it a receiving coil (35) for the data transmission, an electronic circuit board (36) with integrated Hall sensors (37, 41) for capturing the wheel rotation and also a sending coil (38) with a coil core (39) for power transmission to the electronic unit (18).

12. Measurement wheel according to claim 11, characterised in that the sending and receiving coil (38, 27) of the power transmission on the one hand, and the sending and receiving coil (26, 35) of the data transmission on the other hand, are wound in opposite directions, so that the magnetic fields of the power transmission and of the data transmission are of different orientations in space.

13. Measurement wheel according to claim 11, characterised in that four angle detectors (37) are arranged in an arc of a circle in the stator base (33) spaced apart by 2.5°, which have associated with them ferrite magnets (30) spaced apart by 2° and glued along a field of 180 of the magnet track of the coil and magnet ring (25).

14. Measurement wheel according to one of claims 1 to 13, characterised in that the wheel flange (7) and/or the wheel rim end face (8) consist of carbon fibre reinforced plastics and the coil and magnet ring (25) of glass fibre reinforced plastics.

## Revendications

1. Roue mesureuse pour la détection de forces et de couples entre une jante, présentant une base de jante pour un pneumatique de véhicule, et un axe d'une roue de véhicule, comportant des capteurs de mesure, disposés entre un élément de paroi frontal de la jante et un flasque de roue, et des moyens pour réaliser un couplage de transmission d'énergie et de données avec un système d'acquisition et de traitement de valeurs mesurées situé côté véhicule, caractérisée en ce que le flasque de roue (7) et/ou l'élément de paroi frontal (8) de la jante sont réalisés en un matériau composite renforcé par des fibres et en ce que les moyens (25), situés côté roue, pour la transmission d'énergie et de données sont montés sur la face intérieure de la base de jante (4) et s'étendent sur la circonférence de cette dernière.

2. Roue mesureuse selon la revendication 1, caractérisée en ce que l'élément de paroi frontal (8) de la jante s'applique sur une région, ayant subi un traitement de sablage, de la base de jante et est relié à la base de jante (4) au niveau de ces zones de raccordement, par complémentarité de formes (9) et en étant ainsi immobilisé contre des déplacements axiaux et radiaux.

3. Roue mesureuse selon la revendication 1, caractérisée en ce que le flasque de roue (7) est réalisé sensiblement sous la forme d'un disque comportant une partie périphérique repliée (15) et un profil central en forme de cuvette (11), la partie périphérique repliée (15) formant, avec l'élément de paroi frontal (8) de la jante, un certain nombre de cavités (16) de réception des capteurs de mesure (6) et la cuvette centrale (11) servant essentiellement à loger une unité électronique (18).

4. Roue mesureuse selon la revendication 3, caractérisée en ce que le flasque de roue (7) présente une forme carrée à côtés incurvés vers l'intérieur, des ajours (22) pratiqués dans l'élément de paroi frontal (8) de la jante, dans ces régions, assurant alors une évacuation de chaleur vers l'extérieur.

5. Roue mesureuse selon la revendication 3, caractérisée en ce que le flasque de roue (7) est, dans la région de la cuvette centrale (11), assemblé à l'axe de roue par l'intermédiaire de jonctions à vis (10, 13) et avec interposition d'un disque calorifuge (14).

6. Roue mesureuse selon la revendication 3, caractérisée en ce que quatre capteurs de mesure, réalisés sous la forme de boîtes dynamométriques à jauge de contrainte (6), sont disposés selon une répartition uniforme sur la circonférence et sont assemblés au flasque de roue (7) et à l'élément de paroi frontal (8) de la jante à l'aide de jonctions à vis (17).

7. Roue mesureuse selon la revendication 6, caractérisée en ce que les signaux de force F_{X}, F_{Y}, F_{Z}, délivrés par les boîtes dynamométriques à jauge de contrainte (6), parviennent, par l'intermédiaire de câbles de raccordement (19) et d'un support à fiches femelles (20) recevant l'unité électronique (18), dans cette dernière.

8. Roue mesureuse selon la revendication 1, caractérisée en ce qu'une couronne de bobines et d'aimants (25), servant à la transmission d'énergie et de données ainsi qu'à la mesure angulaire, est collée fermement à la face intérieure de la base de jante (4) sur la circonférence de cette dernière, est pourvue de bobines intégrées d'émission de données et de réception d'énergie (26, 27) et présente une piste magnétique (30, 31) pour la détermination de la position angulaire et le repérage du point zéro du mouvement de rotation de la roue mesureuse (2).

9. Roue mesureuse selon la revendication 8, caractérisée en ce que la couronne de bobines et d'aimants (25) est doublée, sur sa face tournée vers la base de jante (4), par un certain nombre de couches de feuille magnétiquement conductrice, pour isoler les champs magnétiques de la bobine d'émission de données et de la bobine de réception d'énergie (26, 27) par rapport à la base de jante (4).

10. Roue mesureuse selon la revendication 8, caractérisée en ce qu'à la couronne de bobines et d'aimants (25), est associé un stator (28) fixé côté axe, qui porte les composants (35 à 39, 41) correspondant à la bobine d'émission de données et la bobine de réception d'énergie (26, 27) et à la piste magnétique (30, 31) de la roue mesureuse (2), et qui est relié, par l'intermédiaire d'un câble raccordé de données/énergie (40), au système d'acquisition et de traitement de valeurs mesurées situé côté véhicule.

11. Roue mesureuse selon la revendication 10, caractérisée en ce qu'à une carcasse (33) du stator (28) adaptée au contour de la base de jante, sont fixées une bobine de réception (35) pour la transmission de données, une platine électronique (36) comportant des détecteurs à effet Hall intégrés (37, 41) pour la détection du mouvement de rotation de la roue, ainsi qu'une bobine d'émission (38) munie d'un noyau de bobine (39) pour la transmission d'énergie à l'unité électronique (18).

12. Roue mesureuse selon la revendication 11, caractérisée en ce que les bobines d'émission et de réception (38, 27) pour la transmission d'énergie, d'une part, et les bobines d'émission et de réception (26, 35) pour la transmission de données, d'autre part, présentent des enroulements de sens opposés, afin que les champs magnétiques de la transmission d'énergie et de la transmission de données soient orientés différemment dans l'espace.

13. Roue mesureuse selon la revendication 11, caractérisée en ce que, dans la carcasse (33) du stator, sont montés, à intervalles de 2,5° sur un arc de cercle, quatre détecteurs d'angle (37), auxquels est associée, sur la piste magnétique de la couronne de bobines et d'aimants (25), une série de 180 aimants de ferrite (30) rapportés par collage suivant des intervalles de 2°.

14. Roue mesureuse selon l'une des revendications 1 à 13, caractérisée en ce que le flasque de roue (7) et/ou l'élément de paroi frontal (8) de la jante sont réalisés en matière plastique chargée de fibres artificielles et une couronne de bobines et d'aimants (25) est réalisée en matière plastique armée de fibres de verre.
